# EUROPEAN PATENT SPECIFICATION

(11) **EP 1 852 314 B1**
(45) Date of publication and mention of the grant of the patent: **31.12.2008**
(21) Application number: 06009036.2
(22) Date of filing: 02.05.2006
(51) Int. Cl.: B60R 13/02, B60R 13/01

(54) **Vehicle trim component comprising small-sized distance pieces**
Kraftfahrzeug Verkleidungselement mit kleinen Distanzelementen
Elément de garnissage de véhicule comprenant des pièces d'écartement de faible dimension

(43) Date of publication of application: 07.11.2007
(73) Proprietor: Rieter Technologies AG, 8406 Winterthur (CH)
(72) Inventor: Ghigliotti, Giovanni, 13895 Graglia (Biella) (IT); Ronco, Carlo, 15020 San Giorgio Monferrato (Alessandria) (IT); Iannelli, Giuseppe, 85100 Napoli (IT); Lesage, Giorgio, 10129 Torino (IT)
(74) Representative: Van Adrichem Geisseler, Johanna

(56) References cited:
- EP-A- 1 078 821
- DE-C1- 19 708 046
- FR-A- 2 576 862
- US-A- 3 366 026
- US-A1- 2005 029 837

## Description

Present invention is concerned with a vehicle trim component, in particular a headliner, comprising a panel, preferably made of fibrous materials, and a plurality of small-sized distance pieces on the vehicle's body facing side of the panel.

Vehicle trim components are nowadays mounted not only for decorative reasons, but mainly for technical purposes. Headliners for instance not only help to reinforce the vehicle's body roof construction, but serve to attenuate sound transmission and/or improve sound absorption, serve to accommodate electronic and/or ventilation systems, or incorporate active and/or passive safety systems.

A very common lining for vehicles is extensively described in US-3,366,026. This lining is resilient and air-permeable and consists mainly of foamed plastics material. Distance means are disposed between said lining and the vehicle's roof and are holding said lining spaced apart from said roof in order to form cavities and a double-shell structure. Therewith a passage for the flow of air is defined between the lining and the roof member. Said distance means are integrally foamed ribs, which either consist of the same material and are integrally foamed with the lining or are attached to it so that cavities are formed between the roof member and the lining. These cavities serve as air ducts for supplying air to and removing air from the interior of the vehicle. The ribs may also dampen the vibrations of the roof member. In addition this lining may comprise a reinforcement structure or may be stable and self-supporting without a reinforcing insert. Unfortunately this configuration can not be manufactured with fibrous materials.

Other double shell configurations are described in FR-2'576'862 or DE-197'08'046. Both configurations comprise a plurality of distance means located between the roof member and the inner lining, which distance means serve to increase the stiffness of the roof member. Of course there might be acoustic benefits from these configurations. In particular the inner linings may be manufactured from fibrous materials. The distance means are either glued to the roof member or are integrally formed within the roof member. It is obvious for the man skilled in the art that the configuration disclosed in DE-197'08'046 allows to compensate for the irregular shape of the roof facing side of the inner lining, but is very time consuming to manufacture and therefore too expensive to produce. The configuration disclosed in FR-2'576'862 does not allow to be combined with differently designed inner linings, i.e. linings comprising windows and/or additional features, such as active and/or passive shock absorbers, electronic components such as sensors and/or aerials, differently designed sound absorbers and/or active or passive ventilation systems, all of these additional features leading to variations in shape.

It is an imperative desire of the car's industry to operate with vehicle's trim components, in particular headliners, comprising a plurality of small-sized distance pieces which allow to easily and cost effectively alter the design and/or shape of the upper side of the trim components. These distance pieces are used only to create a space between a trim component, e.g. a headliner, and a vehicle's body structure wall, e.g. a roof member. These small-sized distance pieces do not contribute to any other technical properties, in particular not to the acoustic performance or stiffness of the headliner. These distance pieces usually cover not more than about 5% of the overall area and are about 2 - 5 cm in size.

As disclosed in document US-A-3,366,026, for example, such distance pieces are well-known in the art and conventionally consist of small pieces of slap-foam which is glued onto a selected position on the finished trim component. This operation has to be done manually and is very time consuming, i.e. cost intensive. It is obvious to the man skilled in the art that is not always possible to find positions on the trim part which are flat enough to properly affix these distance pieces. Distance pieces which are not accurately affixed tend to fall off during shipment. Since solvent-containing adhesives, i.e. liquid or paste-like adhesives, feature a long curing time and/or need to be warmed up and/or irradiated, common distance pieces are provided with pressure sensitive adhesives in order to reduce the processing time. Unfortunately the distance pieces affixed by such pressure sensitive adhesives tend to brake off during shipment and/or transportation due to the limited adhesive strength of such pressure sensitive adhesives, in particular when in use with fibrous trim parts. In addition the vehicle's body facing side of these slab-foam distance pieces is not following the contour of the body member. This leads to an uneven force loading to the distance piece when mounted and therefore damages of such a distance piece during usage. It becomes obvious that these distance pieces are not very reliable.

It is therefore the object of present invention to provide a vehicle trim component, in particular a headliner, comprising a panel, preferably made of fibrous materials, and a plurality of small-sized distance pieces on the vehicle's body facing side of the panel, which distance pieces can be automatically affixed to the panel of the trim component, which distance pieces can be placed on any desired position on the panel of the trim component, which distance pieces are easy to shape and which distance pieces can be affixed reliably to the panel of the trim component, in particular to a trim component comprising fibrous material.

This object is achieved by a vehicle trim component comprising the features of present claim 1. In particular this object is achieved by a vehicle trim component comprising a plurality of small-sized distance pieces, which are backfoamed pieces, i.e. pieces which are directly foamed onto said panel and are in direct contact with the panel. Preferably the distance pieces comprise a polyurethane foam and have a density of about 150 kg/m³.

Backfoaming, although not considered to be a subject matter of the invention, is a well known technique in the field of carpet manufacturing and is used for forming sound absorbing backing layers as for instance described in US-2004/0056386.

The different distance pieces in accordance with the invention may be shaped differently, may have a different density and/or may have a different stiffness.

The vehicle trim component in accordance with the invention may be used as a dashboard insulator, a load floor covering or as any interior trim component, in particular as a headliner.

Without discussing the manufacturing process in more detail it becomes obvious for the man skilled in the art, that it is possible to use the demoulding film on the vehicle's body facing side of the panel as part of the shipment bag, since the distance pieces are directly backfoamed onto the panel.

The advantages of present invention are obvious for the man skilled in the art. In particular this invention leads to an increased adhesive power between the distance pieces and the panel due to a mechanical form-fitting. This occurs due to the fact that foamable material is applied in liquid state to the body facing side of the trim component, i.e. before the foaming process. A further important advantage is to be seen in the shapeability of the distance pieces and the freedom to position the distance pieces at any location and automatically. In addition, the applied manufacturing process allows to use the demoulding film, i.e. a PE film, as shipment bag.

In the following the invention is explained by way of example with the aid of the drawings, which show:
- fig. 1:: a schematic top view of a headliner's roof facing side comprising conventionally affixed distance pieces;
- fig. 2:: a schematic view of a headliner's roof facing side comprising backfoamed distance pieces in accordance with the invention.

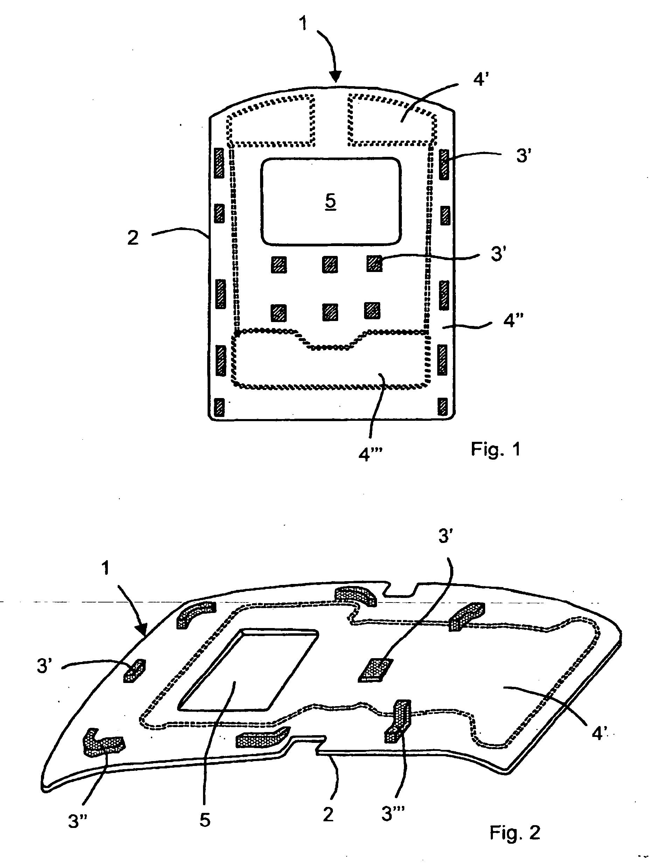

Fig. 1 represents a top view of a conventional vehicle trim component (1), here a headliner comprising a panel (2) and a plurality of small-sized distance pieces (3'). This panel (2) may have an unsteady shape and may comprise a large opening (5) for a window or may comprise elevated (4'), recessed (4"') or bended (4") areas. The distance pieces (3') are made of slab-foam and glued to the finished headliner, i.e. after the moulding process. Previously they have to be cut to the desired dimensions. The glueing operation is performed manually, by operators and lacks a rigid adhesion and sometimes the required working precision. These distance pieces are manufactured from PU scrap, which is bounded by MDI or EPP foam.

The schematic top view shown in fig. 2 represents a headliner's roof facing side comprising backfoamed distance pieces (3', 3", 3"') in accordance with the invention. The shown trim component (1) comprises a panel (2), preferably made of a fibrous material and a plurality of distance pieces (3',3",3"'), which are backfoamed, i.e. which are directly foamed onto said panel (2) and are in direct contact with the panel (2). These backfoamed distance pieces allow to apply them automatically and in situ. They may be formed into any desired shape, in particular they may be flat (3'), curved (3") or bended (3"'). The adhesive power is increased due to the form fitting of backfoamed material. This panel (2) may comprise openings (5), recesses or elevated (4') areas.

Further embodiments of the component according to the invention comprise distance pieces which are designed and arranged in order to serve as a passive impact protection. In particular these spacers can be formed to simply surround electronic devices in order to serve as a passive protecting device.

## Claims

1. Vehicle trim component (1), in particular a headliner, comprising a panel (2), preferably made of fibrous materials, and a plurality of small-sized distance pieces (3', 3", 3"') on the vehicle's body facing side of the panel (2), **characterised in that** these distance pieces (3',3",3"') are backfoamed pieces (3',3",3"'), i.e. pieces which are directly foamed onto said panel (2) and are in direct contact with the panel (2).

2. Vehicle trim component (1) in accordance with claim 1, **characterised in that** the distance piece (3',3",3"') comprise a polyurethane foam.

3. Vehicle trim component (1) in accordance with claim 2, **characterised in that** the polyurethane foam has a density of about 150 kg/m³.

4. Vehicle trim component (1) in accordance with claim 1, **characterised in that** different distance pieces (3',3",3"') are shaped differently.

5. Vehicle trim component (1) in accordance with claim 1, **characterised in that** different distance pieces (3' ,3" ,3"') have a different density.

6. Vehicle trim component (1) in accordance with 1, **characterised in that** different distance pieces (3',3",3"') have a different stiffness.

7. Vehicle trim component (1) in accordance with one of the claims 1 - 6, **characterised in that** the trim component (1) is a dashboard insulator.

8. Vehicle trim component (1) in accordance with one of the claims 1 - 6, **characterised in that** the trim component (1) is a load floor covering.

9. Vehicle trim component (1) in accordance with one of the claims 1 - 6, **characterised in that** the trim component (1) is an interior trim component, in particular a headliner.

10. Vehicle trim component (1) in accordance with one of the claims 1 - 8, **characterised in that** the trim component (1) comprises a demoulding film on the vehicle's body facing side of the panel (2) which film is forming at least part of a shipment bag.

## Patentansprüche

1. Fahrzeugverkleidungselement (1), insbesondere ein Dachhimmel, umfassend einer, vorzugsweise aus fasrigen Materialien hergestellten Platte (2) und mehreren kleinen Distanzstücken (3', 3", 3"') auf der Seite der Platte (2), die zur Fahrzeugkarosserie weist, **dadurch gekennzeichnet, dass** es sich bei diesen Distanzstücken (3', 3", 3"') um hinterschäumte Stücke (3', 3", 3"') handelt, d. h. Stücke, die direkt auf die Platte (2) geschäumt sind und in direktem Kontakt mit der Platte (2) stehen.

2. Fahrzeugverkleidungselement (1) nach Anspruch 1, **dadurch gekennzeichnet, dass** das Distanzstück (3', 3", 3"') einen Polyurethanschaum umfasst.

3. Fahrzeugverkleidungselement (1) nach Anspruch 2, **dadurch gekennzeichnet, dass** der Polyurethanschaum eine Dichte von ungefähr 150 kg/m³ hat.

4. Fahrzeugverkleidungselement (1) nach Anspruch 1, **dadurch gekennzeichnet, dass** unterschiedliche Distanzstücke (3', 3", 3"') unterschiedlich geformt sind.

5. Fahrzeugverkleidungselement (1) nach Anspruch 1, **dadurch gekennzeichnet, dass** unterschiedliche Distanzstücke (3', 3", 3"') eine unterschiedliche Dichte haben.

6. Fahrzeugverkleidungselement (1) nach Anspruch 1, **dadurch gekennzeichnet, dass** unterschiedliche Distanzstücke (3', 3", 3"') eine unterschiedliche Steifheit haben.

7. Fahrzeugverkleidungselement (1) nach einem der Ansprüche 1 - 6, **dadurch gekennzeichnet, dass** es sich bei dem Verkleidungselement (1) um eine Armaturenbrettisolierung handelt.

8. Fahrzeugverkleidungselement (1) nach einem der Ansprüche 1 - 6, **dadurch gekennzeichnet, dass** es sich bei dem Verkleidungselement (1) um eine Ladeflächenabdeckung handelt.

9. Fahrzeugverkleidungselement (1) nach einem der Ansprüche 1 - 6, **dadurch gekennzeichnet, dass** es sich bei dem Verkleidungselement (1) um ein Innenverkleidungselement, insbesondere einen Dachhimmel, handelt.

10. Fahrzeugverkleidungselement (1) nach einem der Ansprüche 1 - 8, **dadurch gekennzeichnet, dass** das Verkleidungselement (1) eine Entformungsfolie auf der Seite der Platte (2), die zur Fahrzeugkarosserie weist, umfasst, wobei die Folie mindestens einen Teil einer Versandtasche bildet.

## Revendications

1. Composant de garniture de véhicule (1), en particulier une garniture de toit, comprenant un panneau (2), de préférence fabriqué en matériaux fibreux, et une pluralité de pièces d'écartement de petites dimensions (3', 3", 3"') sur le côté du panneau (2) faisant face à la carrosserie du véhicule, **caractérisé en ce que** ces pièces d'écartement (3', 3", 3"') sont des pièces (3', 3", 3"') à support mousse, c'est-à-dire des pièces qui sont directement moussées sur ledit panneau (2) et qui sont en contact direct avec le panneau (2).

2. Composant de garniture de véhicule (1) selon la revendication 1, **caractérisé en ce que** les pièces d'écartement (3', 3", 3"') comprennent une mousse en polyuréthane.

3. Composant de garniture de véhicule (1) selon la revendication 2, **caractérisé en ce que** la mousse en polyuréthane à une densité d'environ 150 kg/m³.

4. Composant de garniture de véhicule (1) selon la revendication 1, **caractérisé en ce que** différentes pièces d'écartement (3', 3", 3"') sont formées différemment.

5. Composant de garniture de véhicule (1) selon la revendication 1, **caractérisé en ce que** différentes pièces d'écartement (3', 3", 3"') ont une densité différente.

6. Composant de garniture de véhicule (1) selon la revendication 1, **caractérisé en ce que** différentes pièces d'écartement (3', 3", 3"') ont une rigidité différente.

7. Composant de garniture de véhicule (1) selon l'une quelconque des revendications 1 à 6, **caractérisé en ce que** le composant de garniture (1) est un isolant de tableau de bord.

8. Composant de garniture de véhicule (1) selon l'une quelconque des revendications 1 à 6, **caractérisé en ce que** le composant de garniture (1) est un revêtement de sol de chargement.

9. Composant de garniture de véhicule (1) selon l'une quelconque des revendications 1 à 6, **caractérisé en ce que** le composant de garniture (1) est un composant de garniture intérieur, en particulier une garniture de toit.

10. Composant de garniture de véhicule (1) selon l'une quelconque des revendications 1 à 8, **caractérisé en ce que** le composant de garniture (1) comprend un film de démoulage sur le côté du panneau (2) faisant face à la carrosserie du véhicule, lequel film forme au moins une partie d'un sac de transport.
